# EUROPEAN PATENT APPLICATION

(11) **EP 4 503 711 A1**
(43) Date of publication of application: **05.02.2025**
(21) Application number: 23779964.8
(22) Date of filing: 22.03.2023
(51) Int. Cl.: H04W 24/04, G08G 1/09, G08G 1/123, H04W 36/32, H04W 88/06

(54) **VEHICLE CONTROL SYSTEM AND VEHICLE**

(30) Priority: 28.03.2022 JP 2022051394
(71) Applicant: Hitachi Construction Machinery Co., Ltd., Tokyo 110-0015 (JP)
(72) Inventor: ISHII, Hirotake, Tokyo 100-8280 (JP); KIRIMURA, Akiyoshi, Tsuchiura-shi, Ibaraki 300-0013 (JP); EGUCHI, Yuusuke, Tsuchiura-shi, Ibaraki 300-0013 (JP)
(74) Representative: MERH-IP Matias Erny Reichl Hoffmann Patentanwälte PartG mbB
(86) International application number: PCT/JP2023/011269
(87) International publication number: WO 2023/189952

(57) **Abstract**

To make a system redundant to eliminate handover failures and suppress increased communication load due to wireless modems. A vehicle control system includes an on-board terminal mounted on an unmanned dump truck 10 or a manned vehicle and including a first wireless modem communicating with a base station with a first wireless line and a second wireless modem communicating with a wireless base station 4 with a second wireless line; a server device that communicates with the on-board terminal through the wireless base station 4; a storage section that stores correspondence information in which positional information (LID1 to LID 6) of the unmanned dump truck 10 or the manned vehicle is corresponded with permission/prohibition information that permits or prohibits communication of the second wireless modem; and a control section that permits or prohibits the communication of the second wireless modem according to a position of the unmanned dump truck 10 or the manned vehicle, based on the correspondence information stored in the storage section.

## Description

### Technical Field

This invention relates to a vehicle control systems and a vehicle.

### Background Art

There is increasing demand for various types of vehicles that can travel autonomously, for example, at mine sites from the perspectives of lowering labor costs and improving safety. In response to such demand, a vehicle control system is known that allows a vehicle to travel autonomously without a human onboard driver in response to an instruction from a control server, for example.

For example, Patent Literature 1 discloses a technique for, when an emergency stop input device is operated, transmitting emergency stop signals to all vehicles traveling within a mine site. In addition, Patent Literature 2 discloses a technique for causing a plurality of vehicles to transmit their own relative positional data so as to monitor the mutual positional relationships between the vehicles, and when the vehicles have too closely approached one another, avoiding the mutual interference of the vehicles by decelerating or stopping the vehicles.

To cover the entire region of a large mine site, it is required to build a wireless network including a plurality of the wireless base stations in the mine site. Each of the plurality of the wireless base stations forms one or more wireless areas called "cells." Setting a plurality of cells can build a wireless network covering the entire region of the mine site. When a vehicle moves across the plurality of cells, a process called "handover" is executed. The handover is a process of, when the vehicle moves from a first cell to a second cell, switching a wireless base station as a communications partner of the vehicle from a first wireless base station that forms the first cell to a second wireless base station that forms the second cell.

When the handover is executed, quite a great number of signals are transmitted and received between an on-board terminal mounted on a vehicle and a handover-source wireless base station, and between the on-board terminal and a handover-destination wireless base station. Therefore, during the handover process, a delay or a packet loss may occur in packet communication between the wireless base station and the on-board terminal. In the worst case, the handover may fail, and the procedure may have to start over from the initial connection.

In a vehicle control system, a delay or a loss that occurs in packet communication during a handover process is regarded as a "disruption time." As the disruption time is longer, it is required to decelerate or emergently stop the vehicle to ensure safety. To increase work efficiency at a mine site, it is required to minimize a delay time in a handover process, and also prevent delays and losses in packet communication, and further prevent handover failures. The techniques disclosed in Patent Literature 1 and Patent Literature 2 fail to provide a method of addressing such problems.

### Citation List

### Patent Literature

Patent Literature 1: JP 2017-72946 A
Patent Literature 2: JP H10-222227 A

### Summary of Invention

### Technical Problem

A technique is being considered to make the system redundant by providing a plurality of wireless modems such that even when the handover of a wireless modem fails, the handover succeeds for the system as a whole. However, when the plurality of wireless modems constantly communicate with the base station for the system redundancy, it will be a major problem from the viewpoint of the increased communication load.

The present invention has been made in view of the above-described problems, and provides a vehicle control system and a vehicle that can make the system redundant to eliminate the handover failures and suppress the increased communication load due to the wireless modems.

### Solution to Problem

A vehicle control system according to the present invention includes an on-board terminal mounted on a vehicle and including a first wireless modem communicating with a base station with a first wireless line and a second wireless modem communicating with the base station with a second wireless line; a server device that communicates with the on-board terminal through the base station; a storage section that stores correspondence information in which positional information of the vehicle is corresponded with permission/prohibition information that permits or prohibits communication of at least one of the first wireless modem or the second wireless modem; and a control section that, while communication of at least one of the first wireless modem or the second wireless modem is permitted according to a position of the vehicle based on the correspondence information stored in the storage section, permits or prohibits communication of the other.

### Advantageous Effects of Invention

The vehicle control system of the present invention can make the system redundant to eliminate the handover failures and suppress the increased communication load by the wireless modems.

### Brief Description of Drawings

Fig. 1 is a schematic view illustrating an exemplary overall configuration of a vehicle control system 1000 according to an embodiment.
Fig. 2 is a block diagram for describing a configuration example of an on-board terminal 2.
Fig. 3 is a block diagram for describing a configuration example of an on-board terminal 3.
Fig. 4 is a schematic view for describing an operation of the vehicle control system 1000 according to the embodiment.
Fig. 5 is a schematic view illustrating a state in which an unmanned dump truck 10-1 is traveling on a travel path 100, and a received power of a radio signal transmitted from a wireless base station 4-1 and a received power of a radio signal transmitted from a wireless base station 4-2 gradually change.
Fig. 6 is a graph illustrating a state in which a delay time occurs in packet communication of a first wireless modem 102-1 when the operation in Fig. 5 is performed.
Fig. 7 is a graph illustrating a state in which a delay time occurs in packet communication of a second wireless modem 102-2 when the operation in Fig. 5 is performed.
Fig. 8 is a graph illustrating a state in which a delay time occurs in packet communication in the on-board terminal 3 when the operation in Fig. 5 is performed.
Fig. 9 a schematic view illustrating a state in which an unmanned dump truck 10 is traveling along the travel path 100 in a wireless communication areas of the cells 7-1, 7-2, and 7-3 constituted of the wireless base stations 4-1, 4-2, and 4-3.
Fig. 10 illustrates correspondence information storing permission/prohibition information for permitting or prohibiting communication of the first wireless modem 102-1 and permission/prohibition information for permitting or prohibiting communication of the second wireless modem 102-2 for each section of the travel path 100.
Fig. 11 is a schematic view for describing a communication protocol stack used in the vehicle control system 1000.
Fig. 12 is a schematic view illustrating an example of a data format of a wireless communication layer, a communication permission layer, a secure communication layer, and an application layer.
Fig. 13 is a flowchart for specifically describing an operation of a transmission system of the on-board terminal 2 in the embodiment.
Fig. 14 is a flowchart for specifically describing the reception operation in the on-board terminal 3 of the embodiment.

### Description of Embodiments

Hereinafter, the present embodiment will be described with reference to the accompanying drawings. Throughout the accompanying drawings, components with the same functions may be denoted by the same reference numerals. Although the accompanying drawings illustrate embodiments and implementations based on the principle of the present disclosure, such embodiments and implementations should be used only to understand the present disclosure, and should not be used to narrowly construe the present disclosure. The description of the present specification only illustrates typical examples, and shall not limit the claims or examples of the application of the present disclosure by any means.

Although the present embodiment will be described in full detail for one of ordinary skill in the art to carry out the present disclosure, it should be understood that other implementations and forms are also possible, and thus, any changes to the configuration and structure of the present disclosure as well as replacement of various components is possible without deviating from the scope and spirit of the technical idea of the present disclosure. Thus, the present disclosure should not be narrowly construed based on the following description.

### [Embodiment]

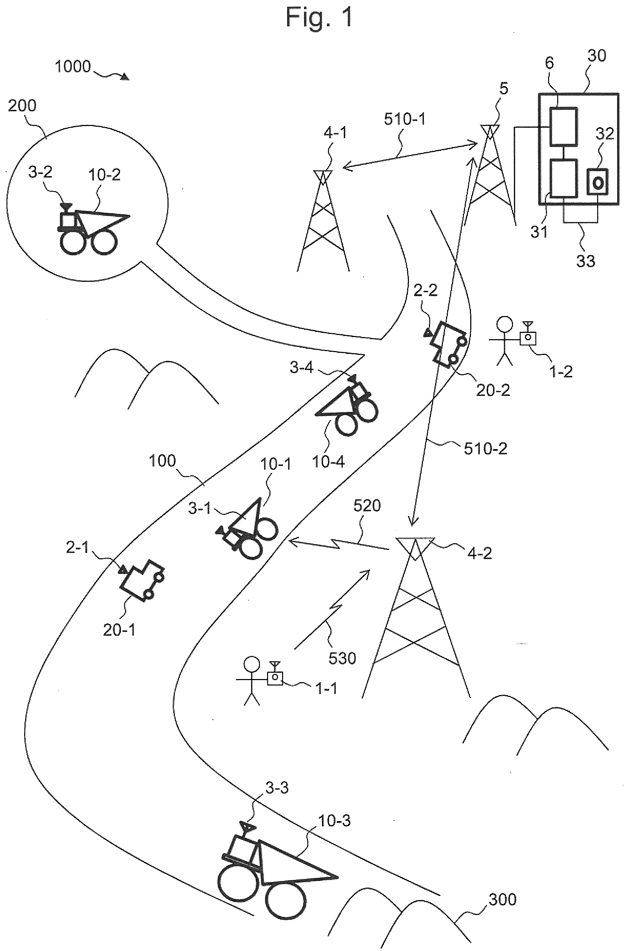

The following is a detailed description of a vehicle control system according to an embodiment with reference to the drawings. Fig. 1 is a schematic diagram illustrating an example of an overall configuration of a vehicle control system 1000 according to the embodiment. The vehicle control system 1000 also functions as an emergency stop system to stop autonomous vehicles in an emergency.

In Fig. 1, the vehicle control system 1000 includes mobile devices 1-1 to 1-2, on-board terminals 2-1 to 2-2, on-board terminals 3-1 to 3-4, wireless base stations 4-1 to 4-2, a control tower 5, autonomous vehicles (hereinafter referred to as "unmanned dump trucks") 10-1 to 10-4, manned vehicles 20-1 to 20-2 operated by human onboard drivers, and a control center 30. The vehicle control system 1000 is configured to perform traveling, emergency deceleration, emergency stop, and other controls for the unmanned dump trucks 10-1 to 10-4 and the manned vehicles 20-1 to 20-2.

The vehicle control system 1000 is installed, for example, in a mine. The unmanned dump trucks 10-1 to 10-4 are unmanned, autonomous vehicles that are, in principle, operated without a human onboard driver and are controlled based on the vehicle control system 1000. The unmanned dump trucks 10-1 to 10-4 are haulage vehicles that load and transport, for example, earth, sand, ore, and other loads. The unmanned dump trucks 10-1 to 10-4 travel autonomously and unmanned on a preset travel path 100 within the mine site. For example, an excavator (not illustrated) is placed at a loading area 200 to load earth, sand, and/or ore onto an unmanned dump truck 10-2, and the unmanned dump truck 10-2 travels back and forth between the loading area 200 and a dumping site 300 along the travel path 100 to transport the load. The control center 30 also is provided with a vehicle central control device 31 and an emergency stop input device 32.

The number of each device is not limited to those illustrated in the figure or to a specific number. For example, there may be only one on-board terminal and only one unmanned dump truck, and the number of one or both thereof may be plural. There may also be only one on-board terminal and only one manned vehicle each, and one or both thereof may be plural.

Although not illustrated in Fig. 1, a system for supporting autonomous traveling of the unmanned dump trucks 10-1 to 10-4 and an operation management system are installed at the mine work site.

The configurations of the mobile devices 1-1 and 1-2 may all be the same or may have different configurations. In the following, the mobile devices 1-1 and 1-2 may be collectively referred to as a "mobile device 1" without distinction. Similarly, the on-board terminals 2-1 and 2-2, the on-board terminals 3-1 to 3-4, and the wireless base stations 4-1 to 4-2 may be collectively referred to as the "on-board terminal 2," the "on-board terminal 3," and the "wireless base station 4," respectively, without distinction. The configurations of the unmanned dump trucks 10-1 through 10-4 may also all be the same, so they may be collectively referred to as "unmanned dump truck 10". The manned vehicles 20-1 and 20-2 may also be collectively referred to as a "manned vehicle 20".

In this embodiment, a control target of the vehicle control system 1000 is the unmanned dump truck 10, but the autonomous vehicles as control targets of the vehicle control system 1000 are not limited to the unmanned dump trucks, and the other unmanned heavy vehicles can also be control targets together and controlled in the same manner as the unmanned dump truck 10.

In addition to the unmanned dump truck 10, which transports loads of earth, sand, ore, and the like, the manned vehicle 20 also travels at the mine site. The manned vehicle 20 is a vehicle configured to be onboard by a driver or another passenger and can be operated by the driver. The manned vehicles 20 are, for example, the above-described excavator, a dozer that prepares a road surface of the travel path 100, a water sprinkler truck, a service vehicle that patrols the mine site, a manned dump truck, and the like.

The mobile device 1 is a portable device that can be carried by a worker in the mine site. The mobile device 1 has a function as an emergency stop device that sends out an emergency stop command signal to instruct the unmanned dump truck 10 to make an emergency stop in an emergency.

The on-board terminal 2 is a vehicle-mounted device mounted on the manned vehicle 20. The on-board terminal 2 also has a function as an emergency stop device that sends out the emergency stop command signal, and the driver or the passenger of the manned vehicle 20 can use the on-board terminal 2 to instruct the unmanned dump truck 10 to make the emergency stop in an emergency. This ensures safety. The emergency stop command signal can be transmitted, for example, from the travel path 100, the loading area 200, or the dumping site 300 within the site.

In this embodiment, the scope and meaning of "emergency" is not limited, and the worker or the driver and the like of the manned vehicle 20 can determine whether or not it is an emergency and issue an emergency stop instruction at his/her own discretion. Generally, whether or not it is an "emergency" is determined based on whether or not it is required to stop the unmanned dump truck 10 as a criterion for the determination. For example, when there is a possibility of contact interference between the unmanned dump trucks 10 or between the unmanned dump truck 10 and the manned vehicle 20, it can be determined to be an emergency. Also, when there is a possibility of contact interference between the worker and the unmanned dump truck 10, it can be determined to be an emergency.

The on-board terminal 3 is a vehicle-mounted device mounted on the unmanned dump truck 10. The on-board terminal 3 can receive signals transmitted from the mobile device 1 or the on-board terminal 2 through the wireless base station 4. This signal includes the emergency stop command signal to stop the unmanned dump truck 10.

The on-board terminal 3 can receive the emergency stop command signal directly from the mobile device 1 or the on-board terminal 2 through the wireless base station 4, or it can be enabled to receive the emergency stop command signal directly from the mobile device 1 or the on-board terminal 2.

When the on-board terminal 3 receives the emergency stop command signal, the unmanned dump truck 10 stops traveling accordingly. The installation location of an antenna of the on-board terminal 3 mounted on the unmanned dump truck 10 is not limited to a specific position. As an example, the antenna can be installed at a location with a good radio wave visibility, for example, in front of a top surface of the unmanned dump truck 10.

The plurality of the wireless base stations 4 each constitute a cell and are capable of wireless communication with the unmanned dump trucks 10 and the manned vehicles 20 positioned inside the cell. For example, since the unmanned dump truck 10 and the manned vehicle 20 move in an area that includes the travel path 100, the loading area 200, and the dumping site 300, the plurality of the wireless base stations 4 are installed such that these areas are included in the cells and the unmanned dump trucks 10 and the manned vehicles 20 can communicate wirelessly.

Each of the plurality of the wireless base stations 4 is connected to the vehicle central control device 31 via the control tower 5 with wireless backhaul lines 510-1 and 510-2, and through a core station 6 in the control center 30. The emergency stop command signals transmitted from the mobile device 1 and the on-board terminal 2 reach the vehicle central control device 31 via each of the wireless base stations 4, the wireless backhaul lines 510-1 or 510-2, and the control tower 5, and through the core station 6. The vehicle central control device 31 transmits an autonomous travel vehicle control signal to the unmanned dump truck 10, thereby enabling the unmanned dump truck 10 to travel autonomously. The vehicle central control device 31 has a function of distributing the emergency stop command signals transmitted from the mobile device 1 and the on-board terminal 2 to the on-board terminals 3 mounted on all the unmanned dump trucks 10 via the core station 6, the control tower 5, the wireless backhaul lines 510-1 or 510-2, and each of the wireless base stations 4.

Since the vehicle central control device 31 is implemented in a general server device or a computer and does not represent a feature of the present invention, a detailed description of the device configuration in the vehicle central control device 31 is omitted.

The vehicle central control device 31 can be configured to stop all the unmanned dump truck 10 or only a certain unmanned dump truck 10 when the emergency stop command signal is issued from any one of the mobile device 1 or the on-board terminal 2 to all the unmanned dump trucks 10 at the mine site.

In addition to the core station 6 and the vehicle central control device 31, the emergency stop input device 32 is installed in the control center 30. The vehicle central control device 31 and the emergency stop input device 32 are connected by a wired line 33 for allowing communication with one another. The emergency stop input device 32 is a device that commands an emergency stop in accordance with an operation of an operator in the control center 30. Therefore, the operator in the control center 30 can use the emergency stop input device 32 to transmit the emergency stop command signal directly to the vehicle central control device 31, thereby commanding an emergency stop for all the unmanned dump trucks 10 or only a certain unmanned dump truck 10. Although the emergency stop input device 32 is described as being connected to the vehicle central control device 31, it can also be configured to wirelessly connect to the wireless base station 4 instead of the vehicle central control device 31.

The on-board terminal 2 and the on-board terminal 3 include a GPS receiving function. This GPS receiving function enables the manned vehicle 20 and the unmanned dump truck 10 to obtain their own positional information.

The on-board terminal 2 mounted on the manned vehicle 20 has a function of transmitting its own positional information. The on-board terminal 3 mounted on the unmanned dump truck 10 can also obtain a distance between the unmanned dump truck 10 and each of the manned vehicles 20 using the positional information of the manned vehicles 20 transmitted from each of the manned vehicles 20 and its own positional information obtained from the GPS receiving function mounted on the unmanned dump truck 10. Of course, a method other than GPS may be used to obtain the own positional information.

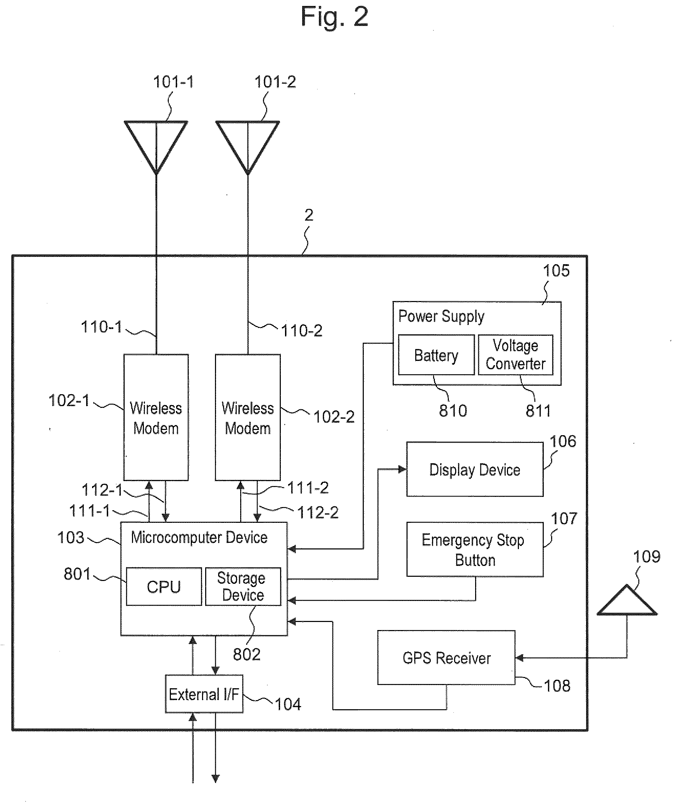

Next, an example of a configuration of the on-board terminal 2 is described with reference to the block diagram in Fig. 2. As an example, the on-board terminal 2 is configured to include a first transmitting and receiving antenna 101-1, a second transmitting and receiving antenna 101-2, a first wireless modem 102-1, a second wireless modem 102-2, a microcomputer device 103, an external interface (I/F) 104, a power supply 105, a display device 106, an emergency stop button 107, a GPS receiver 108, and a GPS antenna 109.

The on-board terminal 2 includes a plurality, for example, two wireless modems 102-1 and 102-2. The first wireless modem 102-1 and the second wireless modem 102-2 are configured to include high-frequency circuits and integrated circuits. The first wireless modem 102-1 and the second wireless modem 102-2 are connected to the first transmitting and receiving antenna 101-1 and the second transmitting and receiving antenna 101-2, respectively, and execute wireless communication with the wireless base station 4 in accordance with a predetermined wireless communication method (for example, LTE, WiFi, and the like). The first wireless modem 102-1 and the second wireless modem 102-2 are connected to the microcomputer device 103 and transmit the received signals to the microcomputer device 103. Specifically, the radio signals 110-1 and 110-2 transmitted from the wireless base station 4 and received at the first transmitting and receiving antenna 101-1 and the second transmitting and receiving antenna 101-2 are input to the first wireless modem 102-1 and the second wireless modem 102-2, and after undergoing the predetermined filtering, amplification, frequency conversion, demodulation, and error correction decoding, they are output to the microcomputer device 103 as reception data 112-1, 112-2 in a secure communication layer.

The wireless modems 102-1 and 102-2 execute the error correction coding, modulation, frequency conversion, amplification, and filtering on transmission data 111-1 and 111-2 in the secure communication layer output from the microcomputer device 103 to generate radio signals 110-1 and 110-2, and output them to the transmitting and receiving antennas 101-1 and 101-2.

The microcomputer device 103 is constituted of a CPU 801 (arithmetic processor) and a storage device 802 (a main memory, a flash memory, and the like), and is connected to a first wireless modem 102-1, the second wireless modem 102-2, an external I/F 104, the power supply 105, the display device 106, the emergency stop button 107, and the GPS receiver 108. A program stored in the storage device 802 is arithmetically executed by the CPU 801 to realize the functions described below. The microcomputer device 103 is configured to give priority to one received first among the reception data 112-1 in the secure communication layer from the first wireless modem 102-1 and the reception data 112-2 in the secure communication layer from the second wireless modem 102-2, and discard the data received later.

The microcomputer device 103 may be partially or entirely constituted of integrated circuits or the like. The microcomputer device 103 determines whether the communication disruption determination related to the functional safety and the power supply 105 are operating normally. It is desirable to use a microcomputer suitable for the functional safety for the microcomputer device 103, and it is preferable to use a microcomputer that meets safety standards such as Safety Integrity Level (SIL). The external I/F 104 includes a voltage conversion section, a protocol conversion section, connectors, and the like and is responsible for interfacing with external devices. Specifically, it is configured to be able to execute conversion to the voltage and protocol required for the external device. For example, the external I/F 104 can execute the interface with the Brake Control Unit (BCU) and the like mounted on the unmanned dump truck 10.

The power supply 105 is constituted of a battery 810, a voltage converter 811, and the like. The power supply 105 has a function of supplying the power supplied from the battery 810 to the various parts in the on-board terminal 3 after converting it to the required voltage with the voltage converter 811.

The display device 106 is constituted of an LED and/or a liquid crystal display device and the like and is connected to the microcomputer device 103. The display device 106 has a function of informing the operator or a maintainer of a normality of the power supply and a result of the disruption determination of wireless communication.

The emergency stop button 107 is connected to the microcomputer device 103 and includes an operating button for the operator to command an emergency stop of the unmanned dump truck 10. Similarly to the emergency stop input device 32 of the control center 30, the emergency stop button 107 commands an emergency stop of the unmanned dump truck 10, and this emergency stop button 107 is provided on the on-board terminal 2. The emergency stop button 107 may have a push-button structure that detects an instruction from the operator by pressing operation. The emergency stop button 107 may include a mechanism that locks the button when it is pressed and keeps it pressed unless it is released.

The GPS receiver 108 is connected to the GPS antenna 109 and the microcomputer device 103 and obtains the positional information indicating the current position of the manned vehicle 20 from the GPS reception signal received through the GPS antenna 109. The GPS receiver 108 outputs the positional information indicating the current position of the manned vehicle 20 to the microcomputer device 103 periodically (for example, in one second cycles).

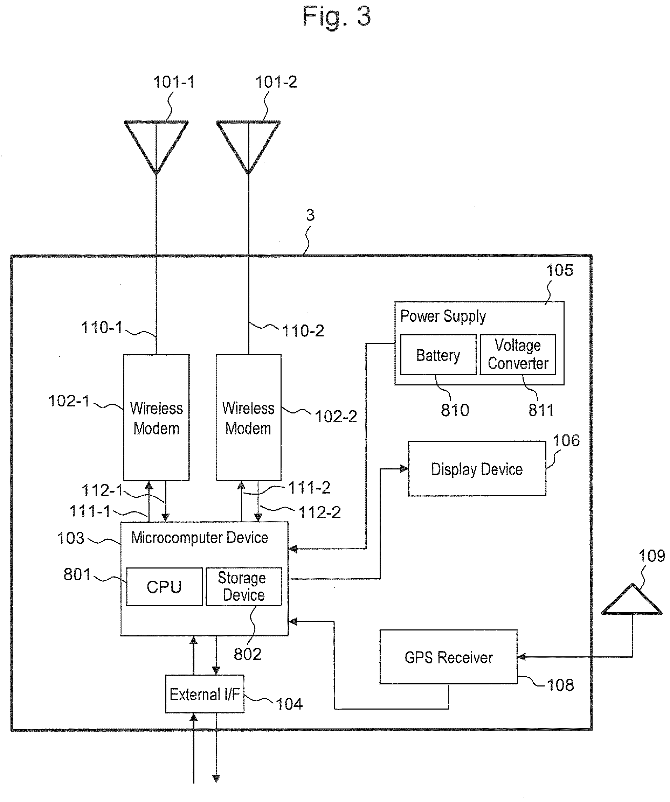

Next, referring to Fig. 3, an example configuration of the on-board terminal 3 is described. The on-board terminal 3, as an example, is configured to include the first transmitting and receiving antenna 101-1, the second transmitting and receiving antenna 101-2, the first wireless modem 102-1, the second wireless modem 102-2, the microcomputer device 103, the external I/F 104, the power supply 105, the display device 106, the GPS receiver 108, and the GPS antenna 109. In other words, the on-board terminal 3 may have the same configuration as the on-board terminal 2, except that it does not have the emergency stop button 107.

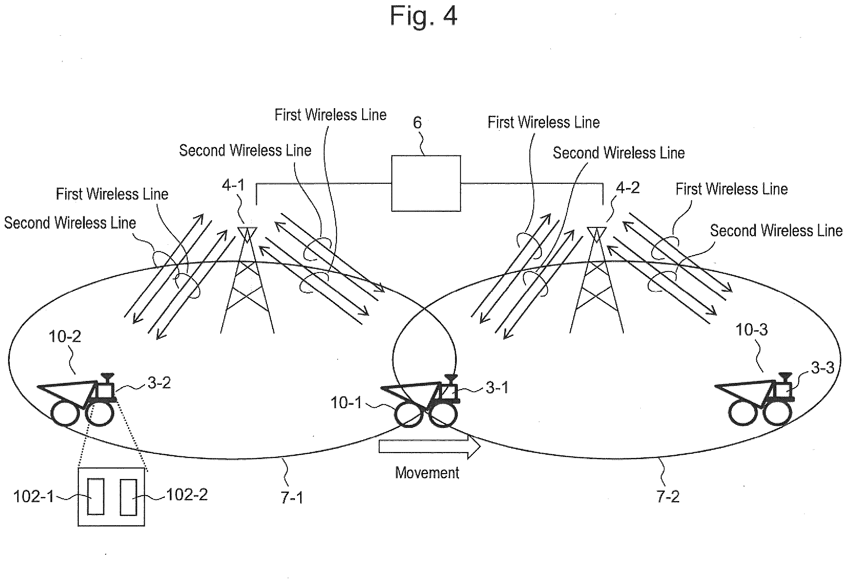

Fig. 4 is a schematic view for describing a state of wireless connection in the vehicle control system 1000 according to the embodiment for the unmanned dump trucks 10 (10-1 to 10-3), the on-board terminals 3 (3-1 to 3-3), and the wireless base stations 4 (4-1 and 4-2). Although the wireless connection for the unmanned dump truck 10 is described here, the same wireless connection can be made for the manned vehicle 20. In order to cover the entire area of the vast mine site, the vehicle control system 1000 includes the plurality of the wireless base stations 4 and the plurality of cells 7. The two wireless base stations 4 (4-1, 4-2) and the two cells 7 (7-1, 7-2) are illustrated here as an example.

Each of the plurality of the wireless base stations 4 constitutes one or a plurality of cells 7 as a wireless communication area. Here, the two wireless base stations 4-1 and 4-2 each constitute one cell 7 (7-1, 7-2), and these two cells 7-1 and 7-2 cover the entire mine area. When the unmanned dump truck 10 and/or the manned vehicle 20 move across the cells 7-1 and 7-2, a procedure called handover is executed. In the following, the handover is mainly described for the unmanned dump trucks 10, but the same description can be applied to the manned vehicles 20.

In the handover procedure, a great number of communication messages are transmitted and received between the on-board terminal 3 mounted on the unmanned dump truck 10 and the handover-source wireless base station 4, and between the on-board terminal 3 and the handover-destination wireless base station 4 through the core station 6. During the handover procedure, there is a possibility of delay or loss in packet communication between the wireless base station 4 and the on-board terminal 3. In the worst case, the handover may fail, and the procedure may have to start over from the initial connection. In other words, when the unmanned dump truck 10 moves across the plurality of cells 7, the handover procedure is executed, which may cause the delay and loss to occur in packet communication. Since the delay and loss in packet communication are regarded as "disruption time," the vehicle must decelerate or emergency stop to ensure safety when a certain amount of disruption time is exceeded. Therefore, the delay time caused by the handover procedures must be minimized, and the packet communication delay and loss and thus the handover failures must be eliminated.

Referring to Fig. 4, the operation of the vehicle control system 1000 according to the embodiment will be described in detail. The on-board terminal 3 (3-1 to 3-3) mounted on the unmanned dump trucks 10 include a plurality of (for example, two) wireless modems 102-1 and 102-2 for the high-speed communication and the improved reliability. Both the respective modems communicate with the wireless base station 4 using the first wireless line and the second wireless line.

For example, assume that the unmanned dump truck 10-1 is traveling from the cell 7-1, which is constituted of the wireless base station 4-1, toward the cell 7-2, which is constituted of the wireless base station 4-2. Then, the received power of the radio waves transmitted from the wireless base station 4-1 and received through the first and second wireless lines gradually decreases, and conversely, the received power of the radio waves transmitted from the wireless base station 4-2 and received through the first and second wireless lines gradually increases.

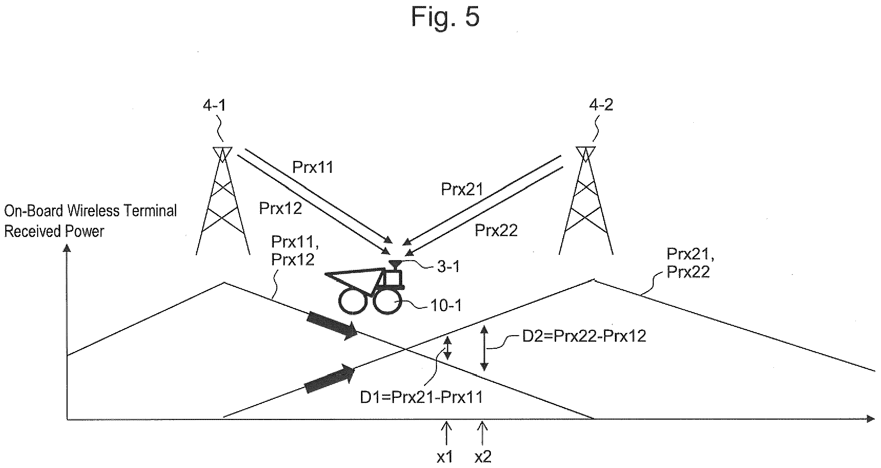

With reference to Fig. 5, it is described how the unmanned dump truck 10-1 travels along the travel path 100 and how the received power of the radio signal transmitted from the wireless base station 4-1 and the received power of the radio signal transmitted from the wireless base station 4-2 change. The vertical axis of the graph in Fig. 5 is the received power of the radio signal transmitted from the wireless base station 4, and the horizontal axis is the position of the travel path (distance x from a predetermined point). In Fig. 5, the received power of the radio signal transmitted from the wireless base station 4-1 and received at the first wireless modem 102-1 is Prx11, the received power of the radio signal transmitted from the wireless base station 4-1 and received at the second wireless modem 102-2 is Prx12, the received power of the radio signal transmitted from the wireless base station 4-2 and received at the first wireless modem 102-1 is Prx21, and the received power of the radio signal transmitted from the wireless base station 4-2 and received at the second wireless modem 102-2 is Prx22.

Here, let us consider the case where the unmanned dump truck 10-1 travels along the travel path from the cell 7-1 constituted of the wireless base station 4-1 toward the cell 7-2 constituted of the wireless base station 4-2, and reaches close to the boundary between cells 7-1 and 7-2. In this case, the received powers Prx11 and Prx12 of the radio signals transmitted from the wireless base station 4-1 gradually decrease, while the received powers Prx21 and Prx22 of the radio signals transmitted from the wireless base station 4-2 gradually increase. In order to maintain the communication, the on-board terminal 3-1 mounted on the unmanned dump truck 10-1 executes the handover for switching from a connection to the wireless base station 4-1 to a connection to the wireless base station 4-2 at the appropriate timing,

There are several ways to execute the handover. Here, a difference between the received power of the radio signal from the handover-source wireless base station 4-1 and the received power of the radio signal from the handover-destination wireless base station 4-2 is used for the determination by comparing it with a threshold to control the timing of the start of the handover. Here, the handover-source wireless base station 4-1 refers to a wireless base station with which the connection was originally established and will be terminated after the handover is completed, and the handover-destination wireless base station 4-2 refers to a wireless base station with which the connection will be newly established through the handover procedure. In the case of LTE, the threshold may also be a threshold to start transmitting Measurement Report messages, which trigger the start of the handover procedure.

The on-board terminal 3 according to the embodiment includes a plurality of (for example, two) wireless modems 102-1 and 102-2, and in the plurality of wireless modems 102-1 and 102-2, the thresholds Thrl and Thr2 for determining the handover are set to different values. For example, the threshold Thrl for determining the start of the handover in the first wireless modem 102-1 can be set to 3 dB, and the threshold Thr2 for determining the start of the handover in the second wireless modem 102-2 can be set to 6 dB.

Specifically, when a difference signal D1 (= Prx21 - Prx11) between the received power Prx11 of the radio signal transmitted from the wireless base station 4-1 and received at the first wireless modem 102-1 and the received power Prx21 of the radio signal transmitted from the wireless base station 4-2 and received at the first wireless modem 102-1 reaches the threshold Thrl (3 dB), the first wireless modem 102-1 starts the handover procedure from the wireless base station 4-1 to the wireless base station 4-2.

When a difference signal D2 (= Prx22 - Prx12) between the received power Prx12 of the radio signal transmitted from the wireless base station 4-1 and received at the second wireless modem 102-2 and the received power Prx22 of the radio signal transmitted from the wireless base station 4-2 and received at the second wireless modem 102-2 reaches the threshold Thr2 (6dB), the second wireless modem 102-2 starts the handover procedure from the wireless base station 4-1 to the wireless base station 4-2.

The second wireless modem 102-2 employs the threshold Thr2 for starting the handover that is greater than the handover threshold Thrl of the first wireless modem 102-1. Therefore, in the situation illustrated in Fig. 5, the second wireless modem 102-2 will start the handover procedure later than the first wireless modem 102-1.

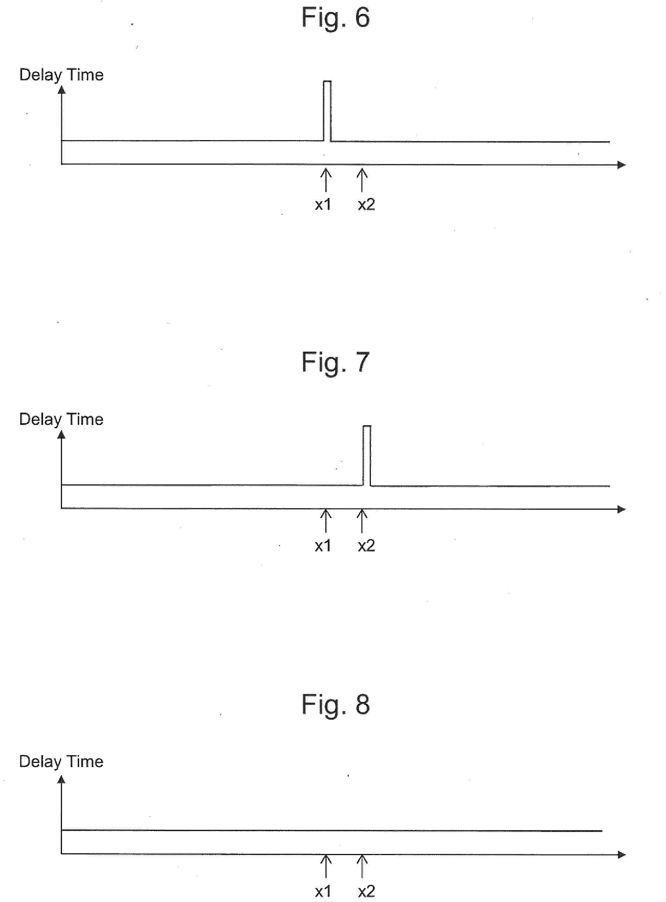

Referring to Figs. 6 through 8, a state of occurrence of a delay time in packet communication in the first wireless modem 102-1 (Fig. 6), a state of occurrence of a delay time in packet communication in the second wireless modem 102-2 (Fig. 7), and a state of occurrence of a delay time in the entire on-board terminal 3 (Fig. 8) when the operation of Fig. 5 is performed are described. In the graphs in Figs. 6 through 8, the horizontal axis indicates the position (x) along the travel path, and the vertical axis indicates the delay time of the packet communication occurring at each device.

For example, when the unmanned dump truck 10-1 reaches the position x1 and the difference signal D1 = Prx21 - Prx11 reaches the threshold Thrl, the first wireless modem 102-1 starts the handover procedure. At this time, in addition to the communication between the first wireless modem 102-1 of the on-board terminal 3-1 and the wireless base station 4-1 or the wireless base station 4-2, the handover-source wireless base station 4-1 and the handover-destination wireless base station 4-2 transmit and receive a very great number of communication messages through the core station 6. For example, in order to transfer terminal information of the on-board terminal 3-1 held at the handover-source wireless base station 4-1 to the handover-destination wireless base station 4-2, a great number of communication messages are transmitted and received between the wireless base stations 4-1 and 4-2. The communication messages are also transmitted and received to confirm whether the handover-destination wireless base station 4-2 has a capacity to accept the on-board terminal 3-1.

As illustrated in Fig. 6, during the execution of the handover procedure in the first wireless modem 102-1, at the handover position x1 of the first wireless modem 102-1, the delay time in packet communication between the wireless base station 4-1 or the wireless base station 4-2 and the first wireless modem 102-1 increases. During the handover procedure, not only the delay in packet communication but also packet loss may occur. In the worst case, the handover procedure may fail and the connection may have to start over from the initial connection.

When the unmanned dump truck 10-1 reaches the position x2 and the difference signal D2 = Prx22 - Prx12 reaches the threshold Thr2, the second wireless modem 102-2 starts the handover procedure. At this time, similarly to those in the first wireless modem 102-1, in addition to the communication between the second wireless modem 102-2 of the on-board terminal 3-1 and the wireless base station 4-1 or the wireless base station 4-2, a great number of communication messages are transmitted and received through the core station 6 between the handover-source wireless base station 4-1 and the handover-destination wireless base station 4-2.

As illustrated in Fig. 7, during the execution of the handover procedure in the second wireless modem 102-2, at the handover position x2 of the second wireless modem 102-2, the delay time in packet communication between the wireless base station 4-1 or the wireless base station 4-2 and the second wireless modem 102-2 increases. During the handover procedure, not only the delay in packet communication, but also packet loss may occur. In the worst case, the handover procedure may fail and the connection may have to start over from the initial connection.

However, as mentioned above, in the on-board terminal 3-1, the microcomputer device 103 has a function of processing the packets arrived early among the received packets from the first wireless modem 102-1 and the received packets from the second wireless modem 102-2 and discarding the packets arrived late. Thus, as illustrated in Fig. 8, at the handover point x1 of the first wireless modem 102-1 and at the handover point x2 of the second wireless modem 102-2, the packets arrived at the second wireless modem 102-2 or the first wireless modem 102-1 earlier are processed, respectively. Therefore, even when there is a delay time at the first wireless modem 102-1 and the second wireless modem 102-2 at the points x1 and x2, respectively, the on-board terminal 3-1 as a whole will not cause any delay in the packet communication process. Therefore, the various vehicles can operate without the emergency deceleration or the emergency stop process, thereby improving the mine productivity while ensuring safety. The same effect can be obtained even when the packet loss or handover failure occurs at the wireless modem. The delay times illustrated in Figs. 6 through 8 are examples to describe the present embodiment in an easy-to-understand manner. In reality, variations and the like may occur, but they do not override the effects of the present embodiment. Although the explanation is omitted, the on-board terminal 2 also similarly includes the plurality of wireless modems 102-1 and 102-2, and can be similarly given the different handover thresholds and perform the same operation as described above.

However, the constant communication of the on-board terminals 2 and 3, which include the first wireless modem 102-1 and the second wireless modem 102-2 and uses the first wireless line and the second wireless line, causes a major problem in terms of the increased communication load. In addition, when the frequencies (channels) of the first wireless line and the second wireless line are different, it becomes a frequency (channel) exhaustion problem. Doubling the communication load or occupying the two frequencies (channels) in a limited radio resource is a serious problem and remains as a major issue in a single network at a mine.

Therefore, by permitting only the communication by one of the first wireless modem 102-1 and the second wireless modem 102-2 of the on-board terminal 2 and the on-board terminal 3 in a section or an area with a range, and prohibiting the communication by the other, the communication load is expected to be reduced. Specifically, the on-board terminal 2 and the on-board terminal 3, which include the plurality of wireless modems 102-1 and 102-2, store correspondence information in which the positional information of the vehicles, permission/prohibition information permitting or prohibiting the communication of the first wireless modem 102-1, and permission/prohibition information permitting or prohibiting the communication of the second wireless modem 102-2 are corresponded with one another.

For example, by permitting the communication of the second wireless modem 102-2 only in the handover area (a section with a certain range) for the first wireless modem 102-1 and prohibiting the communication of the second wireless modem 102-2 in other areas, a significant reduction in the communication load can be expected.

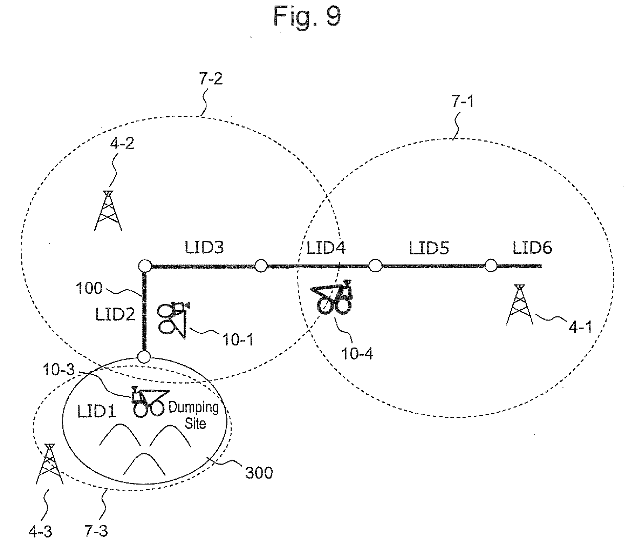

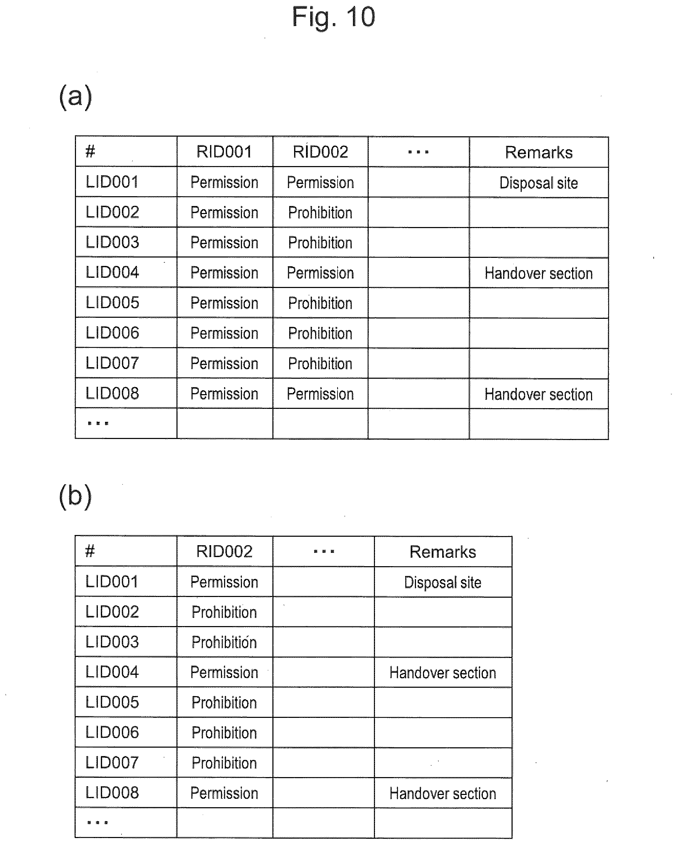

Figs. 9 and 10 are used to provide a specific description of a configuration that allows transmission from the second wireless modem 102-2 only in the handover area at the first wireless modem 102-1 to execute the communication with the vehicle central control device 31.

In Fig. 9, in the wireless communication areas of the cells 7-1, 7-2, and 7-3 constituted of the wireless base stations 4-1, 4-2, and 4-3, the unmanned dump truck 10 travels back and forth along the travel path 100 and transports the load between the loading area 200 (not illustrated) and the dumping site 300. The travel path 100 is divided into sections (LID 1 to LID 6), each of which is pre-determined. The first wireless modem 102-1 and the second wireless modem 102-2 control the transmission of packets based on the permission/prohibition information set for each section. The identifier of the section is the LID. The pre-determined sections (LID 1 to LID 6) may use something like the permitted driving section determined by the control system for the autonomous driving of the unmanned dump truck 10, or it may be a section created specifically for permitting/prohibiting the communication of the first wireless modem 102-1 and for permitting/prohibiting the communication of the second wireless modem 102-2.

Fig. 10 (a) illustrates the correspondence information storing the permission/prohibition information for permitting or prohibiting the communication of the first wireless modem 102-1 and the permission/prohibition information for permitting or prohibiting the communication of the second wireless modem 102-2 for each section of the travel path 100. This correspondence information is used by the microcomputer device 103 to determine whether to permit/prohibit the communication of the first wireless modem 102-1 and permit/prohibit the communication of the second wireless modem 102-2. The identifiers of the permission/prohibition information that permits/prohibits the communication of the first wireless modem 102-1 and the permission/prohibition information that permits/prohibits the communication of the second wireless modem 102-2 are the RIDs. The loading area 200 and the dumping site 300 are to be defined as a section (LID) of the area. Of course, the loading area 200 and the dumping site 300 may be divided and defined as a plurality of sections (LIDs) instead of one section. The correspondence information may be stored in the on-board terminals 2 and 3 or may be stored in the server device (control center 30). When the correspondence information is stored in the server device (the control center 30), the unmanned dump truck 10 or the manned vehicle 20 obtains the correspondence information from the server device (the control center 30).

For example, since the section LID4 make the boundary between the cells 7-1 and 7-2 constituted of the wireless base stations 4-1 and 4-2 and the handover occurs therein, for the first wireless modem 102-1 and the second wireless modem 102-2 mounted on the unmanned dump truck 10-4 traveling in the section LID4, RID1 and RID2 are "permitted" in the section LID4, respectively, according to the correspondence information in Fig. 10(a). Therefore, in the section LID4, the microcomputer device 103 is controlled to transmit the packets from both the first wireless modem 102-1 and the second wireless modem 102-2 mounted on the unmanned dump truck 10-4.

On the other hand, since the section LID2 causes the traveling in the cell 7-2 constituted of the wireless base station 4-2 and no handover occurs, for the first wireless modem 102-1 and the second wireless modem 102-2 mounted on the unmanned dump truck 10-1 traveling in the section LID2, RID1 is "permitted" and RID2 is "prohibited" in the section LID4 according to the correspondence information in (a) of Fig. 10. Therefore, the microcomputer device 103 is controlled to transmit the packets only from the first wireless modem 102-1 mounted on the unmanned dump truck 10-1 in the section LID2.

The section LID1 as a dumping site includes the boundary between the cells 7-2 and 7-3 constituted of the wireless base stations 4-2 and 4-3 and the handovers occurs, for the first wireless modem 102-1 and the second wireless modem 102-2 mounted on the unmanned dump truck 10-3 traveling in the section LID1, RID1 and RID2 are each "permitted" in the section LID1 according to the correspondence information in Fig. 10(a). Therefore, the microcomputer device 103 is controlled to transmit the packets from both the first wireless modem 102-1 and the second wireless modem 102-2 mounted on the unmanned dump truck 10-3. In fact, since the handover may occur at the dumping site due to the raising and lowering a load body of the unmanned dump truck 10, it is desirable to set the plurality of RIDs to be "Permission," not only on the cell boundaries.

It is described that the correspondence information illustrated in Fig. 10 in which the positional information of the vehicle, the permission/prohibition of the communication of the first wireless modem 102-1, and the permission/prohibition of the communication of the second wireless modem 102-2 are corresponded with one another have a configuration to be stored in advance in the microcomputer device 103. However, the correspondence information may also have a configuration to be updated by the vehicle central control device 31 through the wireless base station 4 with a wireless line as appropriate. Since the vehicle central control device 31 manages the positional information of the unmanned dump truck 10, it is also possible to have a configuration to give an instruction for a transmission permission directly from the vehicle central control device 31 through the wireless base station 4 with the wireless line.

In the correspondence information illustrated in Fig. 10(a), the positional information of the vehicle, the permission/prohibition of the communication of the first wireless modem 102-1, and the permission/prohibition of the communication of the second wireless modem 102-2 are corresponded with one another, but for example, when the communication of the first wireless modem 102-1 is always permitted as illustrated in Fig. 10(b), there need not be a permission/prohibition of the communication of the first wireless modem 102-1. In other words, the correspondence information may be correspondence information in which the positional information of the vehicle is corresponded with the permission/prohibition of the communication of the second wireless modem 102-2.

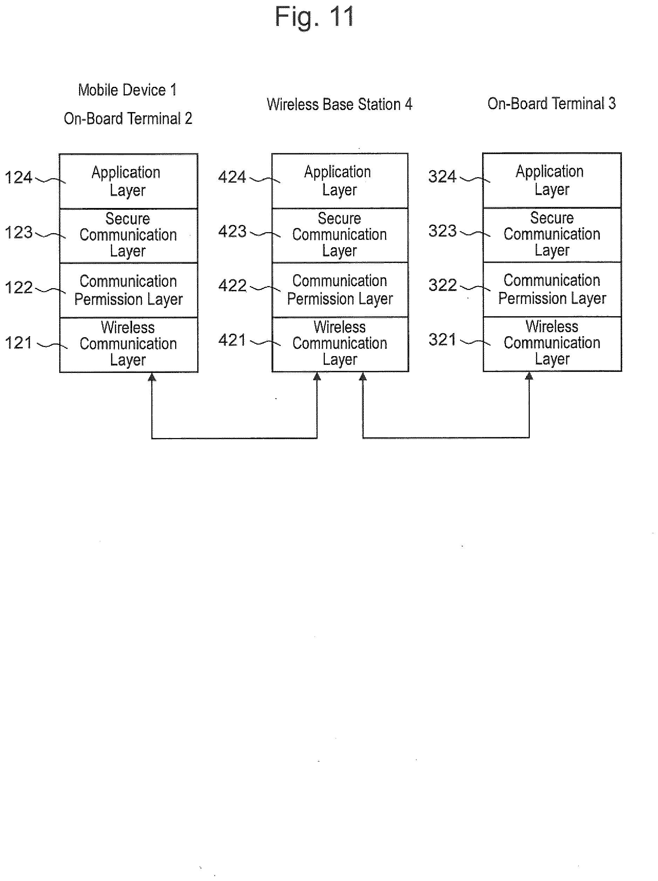

Referring to Fig. 11, a communication protocol stack used in the vehicle control system 1000 is described. Fig. 11 illustrates an example of the communication protocol stack for the mobile device 1, the on-board terminal 2, the on-board terminal 3, and the wireless base station 4.

The communication line in the vehicle control system 1000 according to the embodiment uses a protocol stack including four communication layers. For example, the mobile device 1, the on-board terminal 2, the on-board terminal 3, and the wireless base station 4 mutually transmit and receive data constituted of protocol stacks for a wireless communication layer (a first communication layer), a communication permission layer (a second communication layer), the secure communication layer (a third communication layer), and an application layer (a fourth communication layer).

Wireless communication layers 121, 321 and 421 are layers defined by a communication profile for the purpose of a communication connection and a communication maintenance as the wireless communication, and are layers responsible for the communication functions based on them. Communication permission layers 122, 322, and 422 are layers defined by a communication profile for the purpose of the transmission permission of the transmission data and a reception selection of the reception data, and are layers responsible for the communication functions based on them. Secure communication layers 123, 323, and 423 are defined by a communication profile for the purpose of the functional safety as the secure communication, and are layers responsible for the communication functions based on them. Application layers 124, 324, and 424 are layers responsible for the user interface with the operators and the maintainers.

When the mobile device 1, the on-board terminal 2, the on-board terminal 3, and the wireless base station 4 communicate with one another, the communication connection and the communication maintenance are performed based on the communication profile for each layer. For example, when the mobile device 1 and the on-board terminal 2 communicate with the wireless base station 4, the wireless communication layer 121 of the mobile device 1 and the on-board terminal 2 and the wireless communication layer 421 of the wireless base station 4 use a mutually recognizable format to establish the communication connection. Similarly, the communication permission layer 122 of the mobile device 1 and the on-board terminal 2 and the communication permission layer 422 of the wireless base station 4 use a mutually recognizable format to establish the communication connection. Similarly, the secure communication layer 123 of the mobile device 1 and the on-board terminal 2 and the secure communication layer 423 of the wireless base station 4 use a mutually recognizable format to establish the communication connection. Similarly, the application layer 124 of the mobile device 1 and the on-board terminal 2 and the application layer 424 of the wireless base station 4 use a mutually recognizable format for the communication connection.

Similarly, when the on-board terminal 3 and the wireless base station 4 communicate with one another, the wireless communication layer 321 of the on-board terminal 3 and the wireless communication layer 421 of the wireless base station 4 use a mutually recognizable format to establish the communication connection. Similarly, the communication permission layer 322 of the on-board terminal 3 and the communication permission layer 422 of the wireless base station 4 use a mutually recognizable format to establish the communication connection. Similarly, the secure communication layer 323 of the on-board terminal 3 and the secure communication layer 423 of the wireless base station 4 use a mutually recognizable format to establish the communication connection. The same applies to the application layer 324 of the on-board terminal 3 and the application layer 424 of the wireless base station 4, which use a mutually recognizable format to establish the communication connection. The target data to be transmitted and received is encapsulated and de-encapsulated at each layer crossing.

The microcomputer device 103 executes the functions provided by the application layer 124, the secure communication layer 123, and the communication permission layer 122 in the mobile device 1 and the on-board terminal 2 in Fig. 11. As a function of the application layer 124, the microcomputer device 103 generates transmission data including the emergency stop signal indicating whether or not the emergency stop button 107 is pressed and the positional information indicating its own current position transmitted from the GPS receiver. The microcomputer device 103 transfers the generated transmission data to the secure communication layer 123 as the lower layer.

Among the emergency stop signals, the signal indicating that the emergency stop button 107 is pressed is an emergency stop command signal, which commands each unmanned dump truck 10 to stop. Among the emergency stop signals, the signal indicating that the emergency stop button 107 is not pressed is not the emergency stop command signal. It may be configured such that the emergency stop signal (the emergency stop command signal) is transmitted when the emergency stop button 107 is pressed, and the emergency stop signal (the emergency stop command signal) is not transmitted when the emergency stop button 107 is not pressed. In addition, the microcomputer device 103 adds the control information described later to the transmission data transferred from the application layer 124 as a function of the secure communication layer 123. With this control information, the transmission process is executed based on the communication profile for the purpose of functional safety. This transmission process is a process, for example, to perform safety measures against any or all of the following threats: data corruption, repetition, incorrect order, missing, delay, insertion, spoofing, wrong destination, and the like.

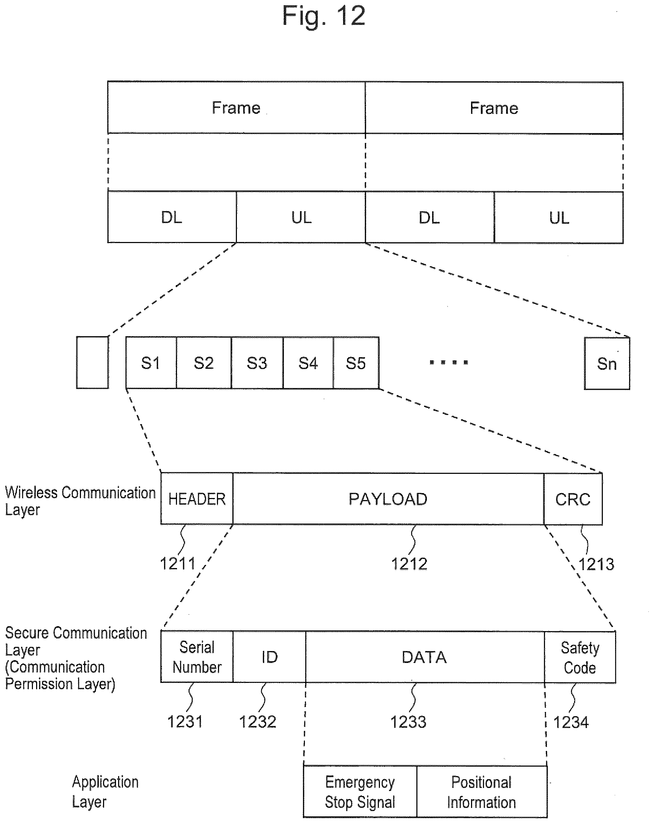

Fig. 12 is a schematic view for illustrating an example of a data format of the wireless communication layer, the secure communication layer (the communication permission layer), and the application layer. The transmission data in the application layer generated by the application layer 124 (Fig. 11), which includes the emergency stop signal and the positional information, becomes DATA1233 in the secure communication layer 123 (communication permission layer 122). Thus, the transmission data in the application layer 124 includes the emergency stop signal and the positional information of the mobile device 1 or the on-board terminal 2 (the manned vehicle 20).

The transmission data in the application layer 124 transmitted as DATA1233 is assigned a serial number 1231, an ID1232, and a safety code 1234 as a safety measure for the purpose of functional safety. The serial number 1231 is a sequence number that the mobile device 1 and the on-board terminal 2 on the transmission side manage within themselves. The ID1232 is identification information that uniquely identifies the mobile device 1 or on-board terminal 2 on the transmission side. The safety code 1234 is a code to apply the safety measure against the above-described threats such as data corruption, repetition, incorrect order, missing, delay, insertion, spoofing, wrong destination, and the like

Thus, the transmission data in the secure communication layer 123 includes the emergency stop signal, the positional information of the mobile device 1 or the on-board terminal 2, that is, the manned vehicle 20, and the safety code 1234.

The microcomputer device 103 assigns the control information to DATA1233 to generate the transmission data 111-1 and 111-2 in the secure communication layer 123. Before the transmission data 111-1 and 111-2 are output to the first wireless modem 102-1 and the second wireless modem 102-2, the transmission permission of the transmission data 111-1 and 111-2 described in Figs. 9 and 10 in the communication permission layer 122 is determined. Note that the transmission data 111-1 in the secure communication layer 123 to the first wireless modem 102-1 and the transmission data 111-2 in the secure communication layer 123 to the second wireless modem 102-2 are in the same data format, and the transmission data 111-1 and 111-2 in the secure communication layer 123 and the transmission data 111-1 and 111-2 in the communication permission layer 122 are also in the same data format. The data format in Fig. 12 is only an example and is not limited thereto.

The first wireless modem 102-1 and the second wireless modem 102-2 have the functions of the wireless communication layer 121 illustrated in Fig. 11. In the wireless communication layer 121, the first wireless modem 102-1 and the second wireless modem 102-2 execute the process on the transmission data 111-1 and 111-2 in the secure communication layer 123 (the communication permission layer 122), which is generated in the secure communication layer 123 and the transmission of which is permitted in the communication permission layer 122, based on the communication profile for the purpose of a wireless communication connection and the communication maintenance.

As illustrated in Fig. 12, in the wireless communication layer 121, the transmission data 111-1 and 111-2 in the secure communication layer 123 (the communication permission layer 122), the transmission of which is permitted in the communication permission layer 122, become PAYLOAD1212. HEADER1211 for the purpose of the connection and the maintenance of communication, and Cyclic Redundancy Code (CRC) 1213 for data error detection are assigned to generate the transmission data in the wireless communication layer 121. The transmission data in the wireless communication layer 121 is divided into a plurality of subframes S (S1 to Sn) and transmitted. The data format of the transmission data in the wireless communication layer in Fig. 12 is only an example and is not limited thereto.

The transmission data in the wireless communication layer 121 includes the emergency stop signal and the positional information of the mobile device 1 or on-board terminal 2, that is, the manned vehicle 20, and is in the form with added data based on the communication profile for the purpose of the wireless communication connection and the communication maintenance.

Thus, by adding data with different functions at respective communication layers, the design of each function is allowed independently for each communication layer.

The transmission data in the wireless communication layer 121 generated in the wireless communication layer 121 is adjusted in timing to be transmitted in a predefined, predetermined subframe, and then error correction coding, modulation, frequency conversion, amplification, filtering, and other processes are applied to generate the radio signals 110-1 and 110-2, and the generated radio signals 110-1 and 110-2 are sent to the transmitting and receiving antenna 101. The transmitting and receiving antennas 101-1 and 101-2 radiate the radio signals 110-1 and 110-2 generated by the first wireless modem 102-1 and the second wireless modem 102-2 toward the wireless base station 4.

Meanwhile, the transmitting and receiving antennas 101-1 and 101-2 receive downstream wireless line radio signals 110-1 and 110-2 transmitted from the wireless base station 4 and send these radio signals to the first wireless modem 102-1 and the second wireless modem 102-2. The first wireless modem 102-1 and the second wireless modem 102-2 execute the filtering, amplification, frequency conversion, demodulation, error correction decoding, and other process on the radio signals 110-1 and 110-2 sent from the transmitting and receiving antennas 101-1 and 101-2 to generate the reception data in the wireless communication layer 121. The data format of the reception data in the wireless communication layer 121 is the same as the transmission data in the wireless communication layer 121 in Fig. 12.

The first wireless modem 102-1 and the second wireless modem 102-2, as a function of the wireless communication layer 121, execute a reception process on the reception data in the wireless communication layer 121 generated by the first wireless modem 102-1 and the second wireless modem 102-2, based on the communication profile for the purpose of the wireless communication connection and the communication maintenance to generate the reception data 112-1 and 112-2 in the secure communication layer 123 (the communication permission layer 122). The data format of the reception data 112 in the secure communication layer 123 (the communication permission layer 122) is the same as the transmission data 111 in the secure communication layer 123 (the communication permission layer 122) in Fig. 12. The reception process based on the communication profile for the purpose of the wireless communication connection and the communication maintenance is, for example, synchronization detection, synchronization maintenance, error detection, and the like.

After executing these processes, the first wireless modem 102-1 and the second wireless modem 102-2 extract PAYLOAD 1212 in the reception data in the wireless communication layer 121, that is, the reception data 112-1 and 112-2 in the secure communication layer 123 (communication permission layer 122). The first wireless modem 102-1 and the second wireless modem 102-2 output the reception data 112-1 and 112-2 in the generated secure communication layer 123 (the communication permission layer 122) to the microcomputer device 103, respectively.

The microcomputer device 103 illustrated in Fig. 2 executes a process on the reception data 112-1 and 112-2 in the secure communication layer 123 (the communication permission layer 122) generated by the first wireless modem 102-1 and the second wireless modem 102-2 by validating the reception data arrived early in the communication permission layer 122 in the secure communication layer 123 (the communication permission layer 122) and discarding the reception data arrived late in the secure communication layer 123 (the communication permission layer 122). Next, the reception process based on the communication profile for the purpose of the secure communication and the functional safety as the secure communication in the secure communication layer 123 is executed on the reception data 112 arrived early in the secure communication layer 123 (the communication permission layer 122). The microcomputer device 103 then generates DATA1233 from the reception data 112 in the secure communication layer 123. The DATA1233 generated here is the reception data in the application layer 124, and is response data and control data for the emergency stop signal and the positional information data transmitted by oneself. The configuration and the operation of the on-board terminal 2 has been described above, and the configuration and the operation of the mobile device 1 are similar.

The microcomputer device 103 of the on-board terminal 3 executes the functions provided by the application layer 324, the secure communication layer 323, and the communication permission layer 322 in the on-board terminal 3 in Fig. 11. As a function of the application layer 324, the microcomputer device 103 generates the transmission data including a response signal to the emergency stop signal indicating whether or not the emergency stop button 107 of the mobile device 1 or the on-board terminal 2 is pressed, and the positional information indicating the own current position transmitted from the GPS receiver 108. The microcomputer device 103 transfers the generated transmission data to the secure communication layer 323 as the lower layer. The response signal to the emergency stop signal is a signal indicating whether the emergency stop signal indicating whether or not the emergency stop button 107 of the mobile device 1 or the on-board terminal 2 is pressed is correctly received.

In addition, as a function of the secure communication layer 323, the microcomputer device 103 adds the control information described later to the transmission data in the application layer 324 transferred from the application layer 324. With this control information, the transmission process is executed based on the communication profile for the purpose of the functional safety. This transmission process is, for example, a process to perform the safety measures against any or all of the following threats: data corruption, repetition, incorrect order, missing, delay, insertion, spoofing, and wrong destination.

Fig. 12 is a view illustrating an example of a data format of the wireless communication layer, the secure communication layer (the communication permission layer), and the application layer. The transmission data in the application layer 324 generated in the application layer 324 (Fig. 11), which includes the response signal to the emergency stop signal and the positional information, becomes DATA1233 in the secure communication layer 323 (the communication permission layer 322). Thus, the transmission data in the application layer 324 includes the positional information of the on-board terminal 3.

The transmission data in the application layer 324, which is transmitted as DATA1233, is assigned the serial number 1231, the ID1232, and the safety code 1234 as the safety measure for the purpose of the functional safety. The serial number 1231 is a sequence number that the on-board terminal 3 on the transmission side manages within itself. The ID1232 is an identification information that uniquely identifies the on-board terminal 3 on the transmission side. The safety code 1234 is a code to apply the safety measure against the above threats such as data corruption, repetition, incorrect order, missing, delay, insertion, spoofing, wrong destination, and the like.

Thus, the communication data in the secure communication layer 323 includes the response signal to the emergency stop signal, the positional information of the on-board terminal 3, and the safety code 1234.

The microcomputer device 103 assigns the control information to DATA1233 to generate the transmission data 111-1 and 111-2 in the secure communication layer 323. Before the transmission data 111-1 and 111-2 are output to the first wireless modem 102-1 and the second wireless modem 102-2, the transmission permission of the transmission data 111-1 and 111-2 described in Figs. 9 and 10 in the communication permission layer 322 is determined. The transmission data 111-1 and 111-2 in the secure communication layer may be the same data. The transmission data 111-1 in the secure communication layer 323 to the first wireless modem 102-1 and the transmission data 111-2 in the secure communication layer 323 to the second wireless modem 102-2 are in the same data format, and the transmission data 111-1 and 111-2 in the secure communication layer 323 and the transmission data 111-1 and 111-2 in the communication permission layer 322 are also in the same data format. The data format in Fig. 12 is only an example and is not limited thereto.

The first wireless modem 102-1 and the second wireless modem 102-2 have the functions of the wireless communication layer 321 illustrated in Fig. 11. In the wireless communication layer 321, the first wireless modem 102-1 and the second wireless modem 102-2 execute the process on the transmission data 111-1 and 111-2 in the secure communication layer 323 (the communication permission layer 322), which is generated in the secure communication layer 323 and the transmission of which is permitted in the communication permission layer 322, based on the communication profile for the purpose of the wireless communication connection and the communication maintenance.

As illustrated in Fig. 12, in the wireless communication layer 321, the transmission data 111-1 and 111-2 in the secure communication layer 323 (the communication permission layer 322), the transmission of which is permitted in the communication permission layer 322, become PAYLOAD1212. HEADER1211 for the purpose of the connection and the maintenance of the communication and Cyclic Redundancy Code (CRC) 1213 to detect data errors are added to generate the transmission data in the wireless communication layer 321. The transmission data in the wireless communication layer 321 is divided into the plurality of subframes S (S1-Sn) and transmitted. The data format of the transmission data in the wireless communication layer in Fig. 12 is only an example and is not limited thereto.

The transmission data in the wireless communication layer 321 includes the response signal to the emergency stop signal and the positional information of the on-board terminal 3, that is, the unmanned dump truck 10, and is in the form with the added data based on the communication profile for the purpose of the wireless communication connection and the communication maintenance.

Thus, by adding data with different functions at respective communication layers, the design of each function is allowed independently for each communication layer.

The transmission data in the wireless communication layer generated in the wireless communication layer 321 is adjusted in timing to be transmitted in a predefined, predetermined subframe, and then error correction coding, modulation, frequency conversion, amplification, filtering, and other processes are applied to generate the radio signals 110-1 and 110-2, and the generated radio signals 110-1 and 110-2 are sent to the transmitting and receiving antenna 101. The transmitting and receiving antennas 101-1 and 101-2 radiate the radio signals 110-1 and 110-2 generated by the first wireless modem 102-1 and the second wireless modem 102-2 toward the wireless base station 4.

Meanwhile, the transmitting and receiving antennas 101-1 and 101-2 receive the downstream wireless line radio signals 110-1 and 110-2 transmitted from the wireless base station 4 and send these radio signals to the first wireless modem 102-1 and the second wireless modem 102-2. The first wireless modem 102-1 and the second wireless modem 102-2 execute the filtering, amplification, frequency conversion, demodulation, error correction decoding, and other process on the radio signals 110-1 and 110-2 sent from the transmitting and receiving antennas 101-1 and 101-2 to generate the wireless communication reception data. The data format of the reception data in the wireless communication layer 321 is the same as the transmission data in the wireless communication layer 321 in Fig. 12.

The first wireless modem 102-1 and the second wireless modem 102-2, as a function of the wireless communication layer 321, execute a reception process on the reception data in the wireless communication layer 321 generated by the first wireless modem 102-1 and the second wireless modem 102-2, based on the communication profile for the purpose of the wireless communication connection and the communication maintenance to generate the reception data 112-1 and 112-2 in the secure communication layer 323 (the communication permission layer 322). The data format of the reception data 112 in the secure communication layer 323 (the communication permission layer 322) is the same as the transmission data 111 in the secure communication layer 323 (the communication permission layer 322) in Fig. 12. The reception process based on the communication profile for the purpose of the wireless communication connection and the communication maintenance is, for example, synchronization detection, synchronization maintenance, error detection, and the like.

After executing these processes, the first wireless modem 102-1 and the second wireless modem 102-2 extract PAYLOAD 1212 in the reception data in the wireless communication layer, that is, the reception data 112-1 and 112-2 in the secure communication layer 323 (communication permission layer 322). The first wireless modem 102-1 and the second wireless modem 102-2 output the reception data 112-1 and 112-2 in the generated secure communication layer 323 (the communication permission layer 322) to the microcomputer device 103, respectively.

The microcomputer device 103 executes a process on the reception data 112-1 and 112-2 in the secure communication layer 323 (the communication permission layer 322) generated by the first wireless modem 102-1 and the second wireless modem 102-2 by validating the reception data arrived early in the communication permission layer 322 in the secure communication layer 323 (the communication permission layer 322) and discarding the reception data arrived late in the secure communication layer 323 (the communication permission layer 322). Next, the reception process based on the communication profile for the purpose of the functional safety as the secure communication in the secure communication layer 323 is executed on the reception data 112 arrived early in the secure communication layer 323 (the communication permission layer 322). The microcomputer device 103 then generates DATA1233 from the reception data 112 in the secure communication layer 323. The DATA1233 generated here is the reception data in the application layer 324, and is response data and control data for the positional information data transmitted by oneself.

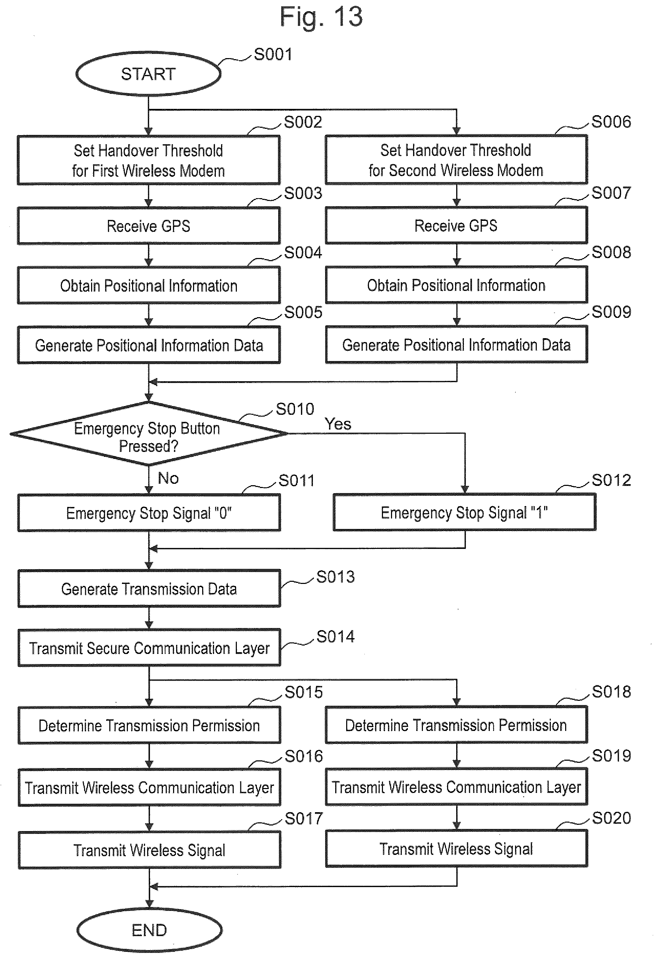

Next, referring to the flowchart in Fig. 13, the operation of the transmission system in the on-board terminal 2 of the embodiment is described in detail. The flowchart in Fig. 13 is assumed to be carried out in a certain predetermined time (for example, 1 second) cycle (Step S001).

The on-board terminal 2 sets the handover threshold Thrl of the wireless modem 102-1, which is stored in the storage device 802 of the microcomputer device (the control section) 103, in the wireless modem 102-1 (Step S002). For example, the handover threshold Thrl of the first wireless modem 102-1 is set to 3 dB. The handover threshold Thrl of the wireless modem 102-1 stored in the storage device 802 of the microcomputer device 103 may be in the form of being updated from the vehicle central control device 31 through the wireless base station 4 with the wireless line as appropriate.

Furthermore, the on-board terminal 2 sets the handover threshold Thr2 of the second wireless modem 102-2, which is stored in the storage device 802 of the microcomputer device 103, in the second wireless modem 102-2 (Step S006). For example, the handover threshold Thr2 of the second wireless modem 102-2 is set to 6 dB. The handover threshold Thr2 of the wireless modem 102-2 stored in the storage device 802 of the microcomputer device 103 may be in the form of being updated from the vehicle central control device 31 through the wireless base station 4 with the wireless line as appropriate.

The threshold Thrl and the threshold Thr2 may be static values obtained in advance from the model and the maximum traveling speed of the manned vehicle 20 and the maximum loading capacity of the manned vehicle 20, or they may be dynamic values obtained from the model and the current traveling speed of the manned vehicle 20, and the current loading capacity of the manned vehicle 20. The on-board terminal 2 may receive detection signals from a speed sensor of the manned vehicle 20 and a weight sensor that measures a weight of a payload from the external I/F 104, and may determine the thresholds Thrl and Thr2 according to these detection signals.

After the handover threshold Thrl of the first wireless modem 102-1 is set, the GPS antenna 109 of the on-board terminal 2 receives a GPS signal (Step S003), and based on this GPS signal, the GPS receiver 108 obtains the positional information indicating the current position of the manned vehicle 20 (Step S004). The microcomputer device 103 then generates its own positional information data for the first wireless modem 102-1 (Step S005).

After the handover threshold Thr2 of the second wireless modem 102-2 is set, the GPS antenna 109 of the on-board terminal 2 receives the GPS signal (Step S007), and based on this GPS signal, the GPS receiver 108 obtains the positional information indicating the current position of the manned vehicle 20 (Step S008). The microcomputer device 103 then generates its own positional information data for the second wireless modem 102-2 (Step S009).

Then, the process proceeds to Step S010, it is determined whether or not the emergency stop button 107 is pressed on the on-board terminal 2. When it is determined that the button is not pressed (No in Step S010), the microcomputer device 103 generates the emergency stop signal "0" in the application layer 124 (Step S011). On the other hand, when the emergency stop button 107 is determined to be pressed (Yes in Step S010), the microcomputer device 103 generates the emergency stop signal "1" in the application layer 124 (Step S012). The emergency stop signal "1" is a signal indicating that the emergency stop button 107 is pressed. The emergency stop signal "0" is a signal indicating that the emergency stop button 107 is not pressed.

Then, the microcomputer device 103 generates the transmission data in the application layer 124 including the obtained positional information and the emergency stop signal ("0" or "I") (Step S013). After the generated transmission data in the application layer 124 is subjected to the transmission process required for the functional safety in the secure communication layer 123, a determination on the transmission permission is made in the communication permission layer 122 (Steps S015 and S018), and the data is transmitted to the first wireless modem 102-1 and the second wireless modem 102-2 (Steps S016 and S019). Based on the correspondence information illustrated in Fig. 10, the microcomputer device 103 determines the transmission permission of the first wireless modem 102-1 in the communication permission layer 122 (Step S015), and determines the transmission permission of the second wireless modem 102-2 in the communication permission layer 122 (Step S018).

In Fig. 13, the on-board terminal 2 of the manned vehicle 20 makes the determination on the transmission permission for the first wireless modem 102-1 and the second wireless modem 102-2 based on the correspondence information illustrated in Fig. 10. The on-board terminal 3 of the unmanned dump truck 10 may also make the determination on the transmission permission for the first wireless modem 102-1 and the second wireless modem 102-2 based on the correspondence information illustrated in Fig. 10.

The first wireless modem 102-1 executes the transmission processes required for the wireless communication, such as error correction coding, modulation, frequency conversion, amplification, filtering, and the like on the reception data in the wireless communication layer 121 (Step S016), and transmits the radio signal from the transmitting and receiving antenna 101-1 (Step S017). After the completion of Step S017, the process returns to START (S001) every second, and the same operation is repeated.

Similarly, the second wireless modem 102-2 executes the transmission processes required for the wireless communication, such as error correction coding, modulation, frequency conversion, amplification, filtering, and the like on the reception data in the wireless communication layer 121 (Step S019), and transmits the radio signal from the transmitting and receiving antenna 101-2 (Step S020). After completion of Step S020, the process returns to START (S001) every second, and the same operation is repeated.

By executing the transmission operation according to the flowchart in Fig. 13, the own positional information of the on-board terminal 2 is periodically transmitted, and as long as the emergency stop button 107 is pressed (Step S010: Yes), the emergency stop signal is continuously transmitted as "1" (the emergency stop command signal is transmitted). When the emergency stop button 107 is released (Step S010: No), the microcomputer device 103 transmits the emergency stop signal as "0". With reference to the flowchart in Fig. 13, the transmission operation of the on-board terminal 2 is described, but the same applies to the transmission operation of the mobile device 1.

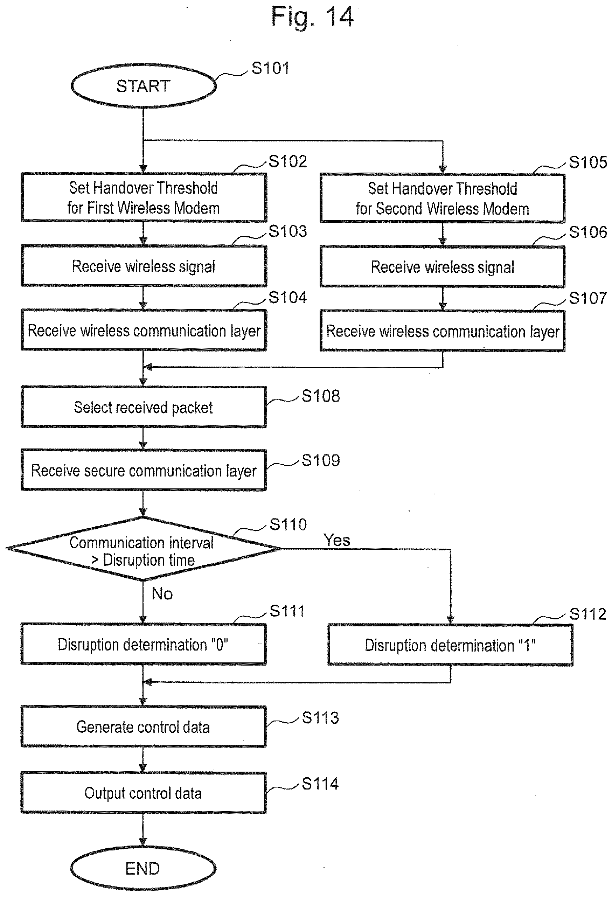

Next, the operation of the receiving system in the on-board terminal 3 is described in detail with reference to the flowchart in Fig. 14. The flowchart in Fig. 14 is assumed to be performed in a certain predetermined time (for example, 1 second) cycle (Step S101).

The on-board terminal 3 sets the handover threshold Thrl of the first wireless modem 102-1, which is stored in the storage device 802 of the microcomputer device 103, in the wireless modem 102-1 (Step S102). For example, the handover threshold Thrl of the first wireless modem 102-1 is set to 3 dB. The handover threshold Thrl of the wireless modem 102-1 stored in the storage device 802 of the microcomputer device 103 may be in the form of being updated from the vehicle central control device 31 through the wireless base station 4 with the wireless line as appropriate.

Furthermore, the on-board terminal 3 sets the handover threshold Thr2 of the second wireless modem 102-2, which is stored in the storage device 802 of the microcomputer device 103, in the second wireless modem 102-2 (Step S105). For example, the handover threshold Thr2 of the second wireless modem 102-2 is set to 6 dB. The handover threshold Thr2 of the second wireless modem 102-2 stored in the storage device 802 of the microcomputer device 103 may be in the form of being updated from the vehicle central control device 31 through the wireless base station 4 with the wireless line as appropriate.

The threshold Thrl and the threshold Thr2 may be static values obtained in advance from the model and the maximum traveling speed of the unmanned dump truck 10, and the maximum loading capacity of the unmanned dump truck 10, or they may be dynamic values obtained from the model and the current traveling speed of the unmanned dump truck 10, and the current loading capacity of the unmanned dump truck 10. The on-board terminal 3 may receive the detection signals from the speed sensor of the unmanned dump truck 10 and the weight sensor that measures the weight of the load from the external I/F 104, and may determine the thresholds Thrl and Thr2 according to these detection signals.

When the radio signal is received from the first transmitting and receiving antenna 101-1 (Step S003), the received radio signal is subjected to the reception process required for the wireless communication, such as the filtering, amplification, frequency conversion, demodulation, error correction decoding, and other processes in the wireless communication layer 321 of the first wireless modem 102-1 (Step S104).

Similarly, when the radio signal is received from the second transmitting and receiving antenna 101-2 (Step S106), the received radio signal is subjected to the reception process required for the wireless communication, such as the filtering, amplification, frequency conversion, demodulation, error correction decoding, and other processes in the wireless communication layer 321 of the second wireless modem 102-2 (Step S107).

The microcomputer device 103 executes a process on the reception data 112-1 and 112-2 in the secure communication layer 323 (the communication permission layer 322) generated by the first wireless modem 102-1 and the second wireless modem 102-2 by validating the reception data 112 arrived early in the communication permission layer 322 in the secure communication layer 323 (the communication permission layer 322) and discarding the reception data arrived late in the secure communication layer 323 (the communication permission layer 322) (Step S108).

The microcomputer device 103 then generates DATA1233 from the reception data 112 in the secure communication layer 323 for the data arrived first out of the reception data 112-1 and 112-2 in the secure communication layer 323 (communication permission layer 322). The DATA1233 generated here is the reception data in the application layer 324, and includes the response data and the control data for the emergency stop signal and the positional information data transmitted by oneself.

Then, the process proceeds to Step S110, a communication interval is measured from a difference between a time of the reception data received last time and a time of the reception data received this time, and it is determined whether or not this measured communication interval exceeds a predetermined disruption time.

When it is determined that the measured communication interval does not exceed the predetermined disruption time (No in Step S110), the microcomputer device 103 generates a disruption determination signal "0" in the application layer 324 (Step S111). On the other hand, when it is determined that the communication interval exceeds the predetermined disruption time (Yes in Step S110), the microcomputer device 103 generates the disruption determination signal "1" in the application layer 324 (Step S112). The disruption determination signal "1" means that the communication has been interrupted for a predetermined period of time or longer.

The microcomputer device 103 generates control data including the obtained disruption determination signal ("0" or "1") and the emergency stop signal (Step S113). The generated control data is converted to a voltage and a protocol required for the external device at the external I/F 104 and output to the external device (Step S114). The external device is connected to, for example, a brake control unit (BCU) mounted on the unmanned dump truck 10. After completion of Step S114, the system loops back to START (S101) every second. The unmanned dump truck 10 performs the emergency deceleration, the emergency stop, and the like according to the disruption determination signal and the emergency stop signal output from the external I/F 104 to the external device, but the details of the determination can be selected as appropriate by the unmanned dump truck 10 or other devices.

As described above, the system according to the embodiment described above provides a vehicle control system that minimizes the increase in the communication load while eliminating the delay and loss in the packet communication, as well as the handover failures, thereby allowing the improved productivity while ensuring the safety of the various vehicles.

The first wireless line and the second wireless line may be different wireless systems. For example, the first wireless line may be LTE and the second wireless line may be WiFi. The handover threshold Thrl of the first wireless modem of the first wireless line and the handover threshold Thr2 of the second wireless modem of the second wireless line are described to be different, but they can of course be the same.

The correspondence information that manages the transmission permission for each wireless modem predetermined for each section LID of the travel path illustrated in Fig. 10 may be updated as appropriate based on the handover log information that remains as a record of the handover actually executed at the wireless base station or the wireless modem. The wireless base station or the wireless modem that stores the log information functions as a log storage section.

### (Effect of Embodiment)

By permitting or prohibiting the communication of the second wireless modem 102-2 according to the position of the manned vehicle 20 or the unmanned dump truck 10 based on the correspondence information illustrated in Fig. 10, for example, at positions other than handover sections LID004 and LID008 and the dumping site LID001, the communication of the second wireless modem 102-2 can be prohibited. As a result, even when the plurality of wireless modems are installed to make the system redundant in order to eliminate the handover failures, the increased communication load due to the wireless modems can be suppressed.

By making the positional information in the correspondence information illustrated in Fig. 10 a section or area with a range, the communication of the wireless modems can be prohibited or permitted on a section-by-section or an area-by-area basis.

The correspondence information illustrated in Fig. 10 may be stored in the on-board terminals 2 and 3, or may be obtained from the server device (the control center 30).

By updating the correspondence information accordingly based on the handover log information, it is possible to adjust the correspondence information according to the history of the handovers.

By using the correspondence information illustrated in Fig. 10(a), in which the positional information (#) of the vehicle, the permission/prohibition information (RID002) that permits or prohibits the communication of the second wireless modem 102-2, and other permission/prohibition information (RID001) that permits or prohibits communication of the first wireless modem 102-1 are corresponded with one another, it is possible to control the permission or the prohibition of the communication for both the first wireless modem 102-1 and the second wireless modem 102-2.

The present invention is not limited to the embodiments described above, but includes various variations. For example, the above embodiments are described in detail for the purpose of describing the present invention in an easy-to-understand manner, and are not necessarily limited to those having all the described configurations. It is also possible to replace some of the configurations of one embodiment with configurations of other embodiments, and it is also possible to add configurations of other embodiments to the configurations of one embodiment. It is also possible to add, delete, or replace some of the configurations of each embodiment with other configurations. In addition, each of the above configurations, functions, processing sections, processing means, and the like may be realized in hardware by designing some or all of them, for example, in an integrated circuit. In addition, each of the above compositions, functions, and the like may be realized in software by a processor interpreting and executing a program that realizes the respective function. The programs, tables, files, and other information that realize each function may be placed in memory, a hard disk, Solid State Drive (SSD), or other recording device, or in a recording medium such as an IC card, SD card, or DVD.

### Reference Signs List

1 Mobile device
2 On-board terminal
3 On-board terminal
4 Wireless base station
5 Control tower
10 Unmanned dump truck (autonomous vehicle)
20 Manned vehicle
30 Control center
31 Vehicle central control device
32 Emergency stop input device
33 Wired line
100 Travel path
101 Transmitting and receiving antenna
102 Wireless modem
103 Microcomputer device (control section)
104 External I/F
105 Power supply
106 Display device
107 Emergency stop button
108 GPS receiver
109 GPS Antenna
121, 321, 421 Wireless communication layer
122, 322, 422 Communication permission layer
123, 323, 423 Secure communication layer
124, 324, 424 Application layer
200 Loading area
300 Dumping site
500 Wireless backhaul line
510 Downstream wireless line
520 Upstream wireless line
801 CPU
802 Storage device
810 Battery
811 Voltage converter
1000 Vehicle control system

## Claims

1. A vehicle control system comprising:
an on-board terminal mounted on a vehicle and including a first wireless modem communicating with a base station with a first wireless line and a second wireless modem communicating with the base station with a second wireless line;
a server device that communicates with the on-board terminal through the base station;
a storage section that stores correspondence information in which positional information of the vehicle is corresponded with permission/prohibition information that permits or prohibits communication of at least one of the first wireless modem or the second wireless modem; and
a control section that, while communication of at least one of the first wireless modem or the second wireless modem is permitted according to a position of the vehicle based on the correspondence information stored in the storage section, permits or prohibits communication of the other.

2. The vehicle control system according to claim 1,
wherein the positional information of the vehicle is a section or an area with a range.

3. The vehicle control system according to claim 2,
wherein the storage section storing the correspondence information is mounted on the on-board terminal.

4. The vehicle control system according to claim 2,
wherein the storage section storing the correspondence information is mounted on the server device, and the correspondence information is transmitted from the server device to the on-board terminal through the base station.

5. The vehicle control system according to claim 4, comprising
a log storage section that stores log information of a handover of switching the base station communicating with the first wireless modem and the second wireless modem,
wherein the correspondence information is updated based on the log information.

6. The vehicle control system according to claim 1,
wherein the correspondence information is information in which the positional information where a handover to switch the base station communicating with the first wireless modem or the second wireless modem occurs is corresponded with the permission information that permits communication of the second wireless modem.

7. The vehicle control system according to claim 1,
wherein the correspondence information is information in which positional information of the vehicle, permission/prohibition information that permits or prohibits communication of the second wireless modem, and other permission/prohibition information that permits or prohibits communication of the first wireless modem are corresponded with one another.

8. A vehicle comprising:
a first wireless modem that communicates with a base station with a first wireless line;
a second wireless modem that communicates with the base station with a second wireless line;
a storage section that stores correspondence information in which positional information of the vehicle is corresponded with permission/prohibition information that permits or prohibits communication of at least one of the first wireless modem or the second wireless modem; and
a control section that, while communication of at least one of the first wireless modem or the second wireless modem is permitted according to a position of the vehicle based on the correspondence information stored in the storage section, permits or prohibits communication of the other.

9. The vehicle according to claim 8,
wherein the positional information of the vehicle is a section or an area with a range.

10. The vehicle according to claim 9,
wherein the vehicle is capable of communicating with a server device through the base station, and
the correspondence information is transmitted from the server device to the vehicle through the base station and stored in the storage section.

11. The vehicle according to claim 8,
wherein the correspondence information is information in which the positional information where a handover to switch the base station communicating with the first wireless modem or the second wireless modem occurs is corresponded with the permission information that permits communication of the second wireless modem.

12. The vehicle according to claim 8,
wherein the correspondence information is information in which positional information of the vehicle, permission/prohibition information that permits or prohibits communication of the second wireless modem, and other permission/prohibition information that permits or prohibits communication of the first wireless modem are corresponded with one another.
